# EUROPÄISCHE PATENTANMELDUNG

(11) **EP 1 283 612 A1**
(43) Veröffentlichungstag der Anmeldung: **12.02.2003**
(21) Anmeldenummer: 01440258.0
(22) Anmeldetag: 06.08.2001
(51) Int. Cl.: H04J 13/00

(54) **OCDM-Detektionvorrichtung**

(71) Anmelder: ALCATEL, 75008 Paris (FR)
(72) Erfinder: Körber, Wolfgang, Dr., 70329 Stuttgart (DE); Schmuck, Harald, 70825 Korntal (DE)
(74) Vertreter: Menzietti, Domenico, Dipl.-Ing

(57) **Zusammenfassung**

Es ist eine spezielle Lösung notwendig bei geschlossenen Faserringen um OCDM-Übertragungssignale aus dem optischen Ring zu entfernen nachdem sie den entsprechenden Empfangs-Ne+zkno+en passiert haben. Gelöst wird diese Aufgabe gelöst durch eine OCDM-Detektionsvorrichtung (1) beinhaltend einen OCDM-Detektor (2) zur Detektion von empfangenen OCDM-Signalen und eine durch den OCDM-Detektor (2) gesteuerte optische Komponente (3) zur Weiterleitung oder Nicht-Weiterleitung von empfangenen OCDM-Signalen in mindestens eine optische Leitung. Bei einer Ausführungsvariante dient der OCDM-Detektor (2) zur Detektion von speziellen OCDM-Signalen in einem individuellen optischen Übertragungskanal und ist derart ausgestaltet, dass eine Ansteuerung der optischen Komponente (3) zur Weiterleitung von OCDM-Signalen erfolgt, wenn keine speziellen OCDM-Signale detektiert werden und eine Ansteuerung der optischen Komponente (3) zur Nicht-Weiterleitung von OCDM-Signalen erfolgt, wenn spezielle OCDM-Signale detektiert werden.

## Beschreibung

Die Erfindung betrifft eine OCDM-Detektionsvorrichtung, einen Netzknoten sowie ein geschlossenes optisches Ringnetz.

Existierende und zukünftige optischen Netzwerke, z.B. sogenannte metropolitan optical networks, sind bzw. werden z.B. als geschlossene Faserringe implementiert, insbesondere für kurze und mittlere Entfernungen. Anstelle von TDM oder WDM bietet OCDM eine vorteilhafte Variante, die eine erhöhte Anzahl von Verbindungen zwischen einer erhöhten Anzahl von Netzknoten zu niedrigeren Kosten ermöglicht; TDM = Time Division Multiplex, WDM = Wavelength Division Multiplex, OCDM = Optical Code Division Multiplex. Im Gegensatz zu TDM und WDM verwenden OCDM-Übertragungskanäle das gesamte Übertragungsspektrum, d.h. ein kontinuierliches optisches Wellenlängenband, gleichzeitig. Die einzelnen OCDM-Übertragungskanäle werden durch unterschiedliche Spektralkodes voneinander unterschieden.

Für WDM und TDM, z.B. implementiert als optische SONET oder SDH Ringe, existieren sogenannte Add/drop-Funktionen; SONET = Synchronous Optical network, SDH = Synchronous Digital Hierarchy. Mittels dieser Add/Drop-Funktionen können einzelne Übertragungskanäle an Netzknoten vom Ring entfernt sowie hinzugefügt werden. Dieses Entfernen und Hinzufügen von einzelnen Übertragungskanälen ist bei OCDM schwieriger, da jeder Übertragungskanal dasselbe Übertragungsspektrum gleichzeitig benutzt. Normalerweise wird jedem Netzknoten mittels eines optischen Splitters ein komplettes Signal beinhaltend alle Übertragungskanäle zugeführt. Mittels eines Kode-Filters wird dann der spezielle Übertragungskanal ausgefiltert. In einem Netzknoten können auch mehrere Kode-Filter zum Ausfiltern unterschiedlicher Übertragungskanäle vorhanden sein. Nach der Filterung werden die im ausgefilterten Übertragungskanal übertragenen Informationen detektiert.

Ein Nachteil der sich ergibt ist, dass der oder die im Netzknoten gefilterten Übertragungskanäle nicht vom Ring entfernt werden. Sie propagieren weiterhin auf dem optischen Ring zusammen mit den restlichen Übertragungskanälen. Ein im Netzknoten gefilterter Übertragungskanal kann solange nicht für die Übertragung neuer Informationen genutzt werden, solange nicht durch Dämpfung die verbliebene Intensität des Signals im gefilterten Übertragungskanal auf dem optischen Ring vernachlässigbar klein geworden ist.

Gerade für kurze und mittlere Entfernungen stellt dies einen erheblichen Nachteil dar auf Grund der geringen Dämpfung im optischen Ring. Für eine entsprechende Dämpfung müssten eine Vielzahl von Umläufen im Ring erfolgen.

Im Gegensatz zu unidirektionalen Baumnetzen, die auch für OCDM-Netze verwendet werden und bei denen Signale an einzelnen Netzknoten terminiert werden können, ist eine spezielle Lösung notwendig bei geschlossenen Faserringen um OCDM-Übertragungssignale aus dem optischen Ring zu entfernen nachdem sie den entsprechenden Empfangs-Netzknoten passiert haben.

Gelöst wird diese Aufgabe durch eine OCDM-Detektionsvorrichtung beinhaltend einen OCDM-Detektor zur Detektion von empfangenen OCDM-Signalen und eine durch den OCDM-Detektor gesteuerte optische Komponente zur Weiterleitung oder Nicht-Weiterleitung von empfangenen OCDM-Signalen in mindestens eine optische Leitung.

Vorteilhafte Ausgestaltungen sind den abhängigen Ansprüchen und der nachfolgenden Beschreibung zu entnehmen.

Drei Ausführungsbeispiele der Erfindung werden im folgenden anhand von sieben Figuren erläutert. Es zeigen:
Fig. 1 ein schematische Darstellung eines optischen Ringnetzes,
Fig. 2 eine schematische Darstellung eines Ausschnitts eines erfindungsgemäßen Netzknotens mit einer erfindungsgemäßen OCDM-Detektionsvorrichtung,
Fig. 3 einen schematisch dargestellten Aufbau einer optischen Komponente aus Fig. 2,
Fig. 4 eine schematische Darstellung eines weiteren optischen Ringnetzes,
Fig. 5 eine schematische Darstellung eines Ausschnitts eines weiteren erfindungsgemäßen Netzknotens,
Fig. 6 eine schematische Darstellung eines weiteren optischen Ringnetzes und
Fig. 7 eine schematische Darstellung eines Ausschnitts eines weiteren erfindungsgemäßen Netzknotens.

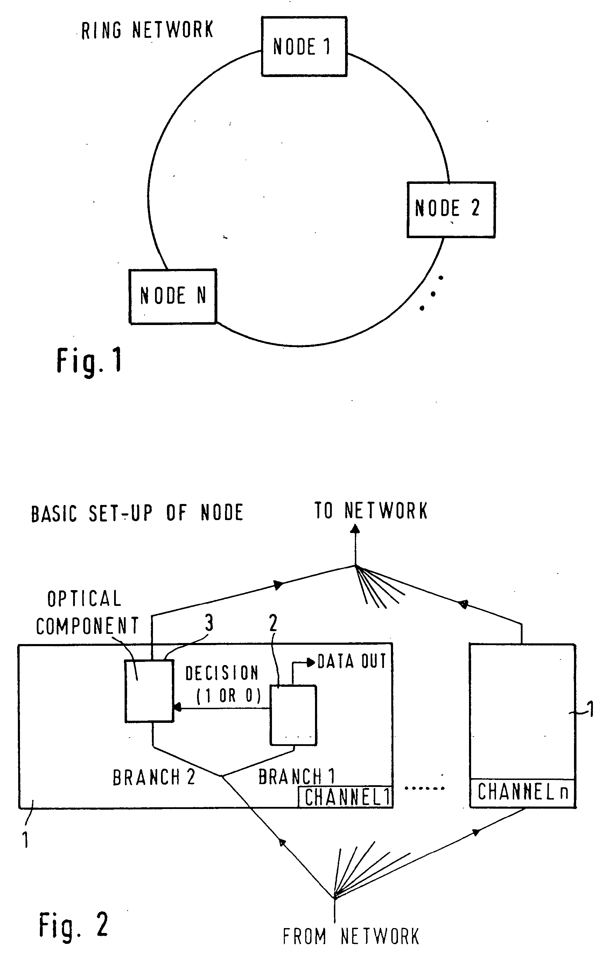

Das erste Ausführungsbeispiel wird nun unter Zuhilfenahme von Fig. 1 bis 3 erläutert. Fig. 1 zeigt ein optisches Ringnetz. Das Ringnetz beinhaltet N Netzknoten node1, node2, ..., nodeN, die über optische Leitungen miteinander verbunden sind; N = natürliche ganze Zahl. Die optischen Leitungen sind beispielsweise durch optische Glasfaserkabel gebildet.

Das Ringnetz dient der Übertragung von OCDM-Signalen. Die OCDM-Signale werden in mehreren optischen Übertragungskanälen übertragen. Jeder Netzknoten node1, node2, ..., nodeN kann von jedem anderen Netzknoten node1, node2, ..., nodeN einzeln adressiert werden. Jeder Netzknoten node1, node2, ..., nodeN kann OCDM-Signale auf jedem optischen Übertragungskanal empfangen und auf jedem optischen Übertragungskanal senden. Dazu sind entsprechende Sende- und Empfangseinheiten vorgesehen. Das Managen des Belegens einzelner Übertragungskanäle durch Netzknoten wird beispielsweise durch ein MAC-Protokoll oder ein Netzwerkmanagement durchgeführt, MAC = Medium Access Control.

OCDM-Signale, die in einem Netzknoten node1, node2, ..., nodeN empfangen werden, für den die OCDM-Signale bestimmt sind, werden in diesem Netzknoten node1, node2, ..., nodeN mittels destruktiver Interferenz ausgelöscht und nicht weiter im Ring transportiert. Beispielsweise werden OCDM-Signale von Netzknoten node1 zu Netzknoten node2 im ersten optischen Übertragungskanal übertragen und im Netzknoten node2 ausgelöscht und nicht weiter auf dem optischen Ring zu Netzknoten nodeN weitergeleitet. Der erste Übertragungskanal steht dann bereits im Netzknoten node2 bereits wieder zur Übertragung neuer Informationen zur Verfügung. Die neuen Informationen werden z.B. in Form von OCDM-Signale von Netzknoten node2 zu Netzknoten nodeN im ersten optischen Übertragungskanal übertragen. Damit ist eine sogenannte Add/Drop-Funktion für OCDM-Signal realisiert.

Die optischen Glasfasern des Rings bilden keinen ununterbrochenen Ring, an den mittels Splitter Netzknoten angeschaltet sind, sondern enden an Bauelementen in den Netzknoten node1, node2, ..., nodeN und beginnen an diesen Bauelementen neu. In den Glasfaserring sind somit Bauelemente der Netzknoten node1, node2, ..., nodeN eingefügt, d.h. integriert.

Fig. 2 zeigt einen Ausschnitt des Netzknotens node1. Die Netzknoten node1, node2, ..., nodeN sind gleich aufgebaut. Der Netzknoten node1 beinhaltet einen optischen Splitter, der zur Aufteilung der mit den Netzknoten node1 und nodeN verbundenen Glasfaser des optischen Rings in n Glasfasern dient, wobei n der Anzahl der optischen Überragungskanäle entspricht. Jede der n Glasfasern ist mit einer OCDM-Detektionsvorrichtung 1 verbunden. Jede OCDM-Detektionsvorrichtung 1 ist für den Empfang von OCDM-Signalen eines optischen Übertragungskanals vorgesehen. Die Ausgangssignale der OCDM-Detektionsvorrichtungen 1 sind über n Glasfasern und einen optischen Kombiner auf eine mit den Netzknoten node1 und node2 verbundenen Glasfaser des optischen Rings gekoppelt.

Jede OCDM-Detektionsvorrichtung 1 beinhaltet einen OCDM-Detektor 2 zur Detektion von empfangenen OCDM-Signalen und eine durch den OCDM-Detektor 2 gesteuerte optische Komponente 3 zur Weiterleitung oder Nicht-Weiterleitung von empfangenen OCDM-Signalen in mindestens eine mit dem optischen Kombiner verbundene optische Leitung. Ferner ist ein optischer Splitter vorgesehen, um zwei Zweige zu generieren. Über den einen Zweig werden die empfangenen OCDM-Signale dem OCDM-Detektor 2 zugeführt, über den anderen Zweig der optischen Komponente 3.

Im OCDM-Detektor 2 werden die empfangenen OCDM-Signale dahingehend überprüft, ob für den Netzknoten node1 bestimmte Signale enthalten sind. Beispielsweise wird in einem Header die Adresse des Netzknotens node1 übertragen, wenn OCDM-Signale für Netzknoten node1 bestimmt sind. OCDM-Detektor 2 filtert beispielsweise über ein Mach-Zehnder-Filter alle empfangenen OCDM-Signale im ersten Übertragungskanal aus. Nach einer optisch/elektrischen Umsetzung wird in einer elektronischen Schaltung, die z.B. einen Prozessor, eine Synchronisationsschaltung, etc. beinhaltet, der Header ausgewertet. Ist die Adresse des Netzknotens node1 vorhanden, so werden die empfangenen OCDM-Signale des ersten Übertragungskanals zur weiteren

Datenauswertung zu einer Verarbeitungseinrichtung einer Empfangseinheit weitergeleitet. Im Falle des Weiterleitens von für Netzknoten node1 bestimmten Signalen wird ein Steuersignal generiert, das die optische Komponente 3 derart ansteuert, dass die empfangenen OCDM-Signale des ersten Übertragungskanals nicht zum Netzwerk weitergeleitet werden. Für den Fall, dass keine für Netzknoten node1 bestimmten OCDM-Signale detektiert werden, wird ein Steuersignal generiert, das die optische Komponente 3 derart ansteuert, dass die empfangenen OCDM-Signale des ersten Übertragungskanals weitergeleitet werden.

Durch die Parallelschaltung der OCDM-Detektionsvorrichtungen 1 wird eine zeitlich parallele, Übertragungskanal-weise Verarbeitung durchgeführt.

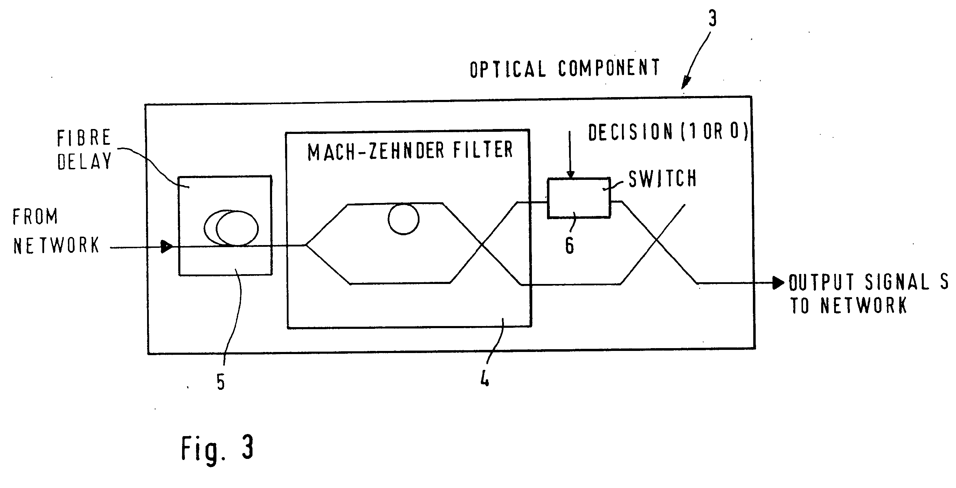

Fig. 3 zeigt eine optische Komponente 3. Sie beinhaltet ein Filter 4, ein Zeitverzögerungsglied 5 und einen Schalter 6.

Die optische Komponente 3 weist einen Ein- und einen Ausgang auf und beinhaltet das mit dem Eingang verbundene, optische Zeitverzögerungsglied 5, das beispielsweise als Stück Glasfaser ausgeführt ist. Dem Zeitverzögerungsglied 5 ist das Filter 4 nachgeschaltet, das beispielsweise als Mach-Zehnder Filter mit zwei Ausgängen ausgeführt ist. Das Mach-Zehnder Filter dient dazu, den entsprechenden optischen Übertragungskanal zu selektieren.

Schalter 6 ist vom OCDM-Detektor 2 gesteuert und einem Ausgang des Mach-Zehnder-Filters nachgeschaltet.

Der Ausgang der optischen Komponente 3 ist über einen optischen 3dB-Koppler mit dem Schalter 6 und dem anderen Ausgang des Mach-Zehnder-Filters verbunden.

Zeitverzögerungsglied 5 dient dazu, das empfangene OCDM-Signal zu verzögern. Die Verzögerung ist abgestimmt auf die Verarbeitungsgeschwindigkeit des OCDM-Detektors 2. Die Verzögerung ist derart eingestellt, dass sie mit dem generierten Steuersignal für Schalter 6 gematched ist. Wird im OCDM-Detektor 2 ein für Netzknoten node1 bestimmtes OCDM-Signal detektiert, so erfolgt zeitlich angepasst die Ansteuerung des Schalters 6 derart, dass das entsprechende OCDM-Signal ausgelöscht und damit nicht weitergeleitet wird.

Die Auslöschung erfolgt durch destruktive Interferenz. Im Mach-Zehnder-Filter wird das empfangene OCDM-Signal über zwei Pfade weitergeleitet, im einen Pfad unverzögert und im anderen Pfad verzögert, entsprechend einer halben Wellenlänge bzw. 180 Grad Phasenverschiebung. An den Ausgängen des Mach-Zehnder-Filters stehen somit zwei um 180 Grad verschobene OCDM-Signale zur Verfügung. Kombiniert man diese, so werden sie in Summe ausgelöscht. Sperrt man die Weiterleitung des einen Signals durch entsprechende Ansteuerung von Schalter 6, so entfällt die Auslöschung und das OCDM-Signal wird weitergeleitet.

Die zusätzlichen Herstellungskosten und der Platzbedarf der optischen Komponente 3 sind gering. Auf einfache Art und Weise ist somit eine gezielte Weiterleitung/Nicht-Weiterleitung von OCDM-Signalen auf dem optischen Ring erreicht. Optische Komponente 3 und OCDM-Detektor 2 können zusammen auf einer hybriden integrierten Schaltung angeordnet werden, auch zusammen mit anderen opto-elektronischen Komponenten. Damit ist eine kosten- und platzsparende Lösung gegeben. Auf einer hybriden integrierten Schaltung können auch mehrere OCDM-Detektionsvorrichtungen 1 angeordnet werden, z.B. n, mit oder ohne entsprechende Sendeeinheiten.

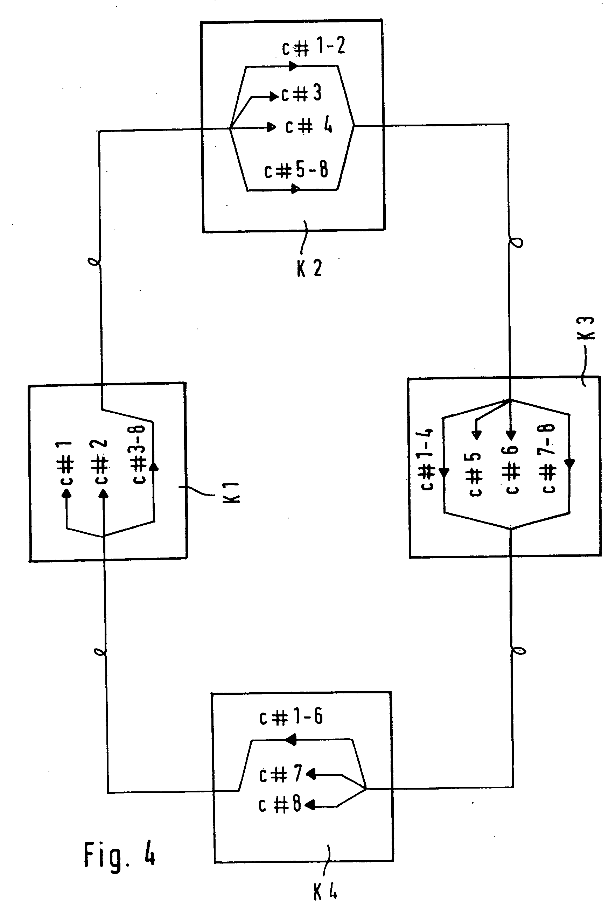

Das zweite Ausführungsbeispiel wird nun unter Zuhilfenahme von Fig. 4 bis 5 erläutert. Fig. 4 zeigt ein optisches Ringnetz. Das Ringnetz beinhaltet vier Netzknoten K1, K2, K3, K4, die über optische Leitungen miteinander verbunden sind. Die optischen Leitungen sind beispielsweise durch optische Glasfaserkabel gebildet.

Über das Ringnetz werden OCDM-Signale in acht unterschiedlichen optischen Übertragungskanälen c#1, c#2, c#3, c#4, c#5, c#6, c#7, c#8 übertragen.

Die Übertragungskanäle c#1, c#2, c#3, c#4, c#5, c#6, c#7, c#8 sind einzelnen Netzknoten K1, K2, K3, K4 zugewiesen. Dadurch ist weniger komplexes Netzwerkmanagement bzw. ein weniger komplexes MAC-Protokoll erforderlich.

Netzknoten K1 empfängt OCDM-Signale auf den optischen Übertragungskanälen c#1 und c#2 und leitet OCDM-Signale auf den Übertragungskanälen c#3 bis c#8 zum Netzknoten K2 weiter.

Netzknoten K2 empfängt OCDM-Signale auf den optischen Übertragungskanälen c#3 und c#4 und leitet OCDM-Signale auf den Übertragungskanälen c#1 bis c#2 sowie c#5 bis c#8 zum Netzknoten K3 weiter.

Netzknoten K3 empfängt OCDM-Signale auf den optischen Übertragungskanälen c#5 und c#6 und leitet OCDM-Signale auf den Übertragungskanälen c#1 bis c#4 sowie c#7 bis c#8 zum Netzknoten K4 weiter.

Netzknoten K4 empfängt OCDM-Signale auf den optischen Übertragungskanälen c#7 und c#8 und leitet OCDM-Signale auf den Übertragungskanälen c#1 bis c#6 zum Netzknoten K1 weiter.

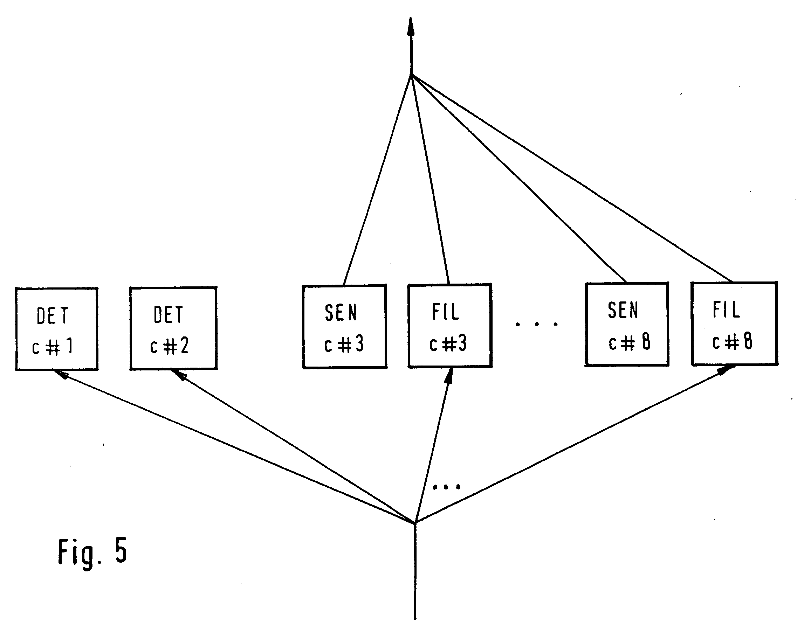

Fig. 5 zeigt beispielhaft einen Ausschnitt aus Netzknoten K1 Netzknoten K1 beinhaltet einen OCDM-Detektor DET c#1 zur Detektion von OCDM-Signalen auf dem Übertragungskanal c#1 und einen OCDM-Detektor DET c#2 zur Detektion von OCDM-Signalen auf dem Übertragungskanal c#2.

Netzknoten K1 beinhaltet ferner sechs Filter FIL c#3 bis FIL c#8 zur Weiterleitung von OCDM-Signalen auf den Übertragungskanälen c#3 bis c#8, wobei in Fig. 5 der Übersicht halber nur Filter FIL c#3 und Filter FIL c#8 graphisch dargestellt sind. Jedes der sechs Filter FIL c#3 bis FIL c#8 beinhaltet z.B. ein entsprechend abgestimmtes Mach-Zehnder-Filter zur Selektion des entsprechenden Übertragungskanals. Optional können auch nur vier Filter FIL c#3 bis FIL c#6 verwendet werden und die beiden Filter c#7 und c#8 eingespart werden, da auf der Strecke K4 - K1 die Übertragungskanäle c#7 und c#8 ungenutzt bleiben.

Die Eingänge der OCDM-Detektoren DET c#1 und DET c#2 sowie die Eingänge der Filter FIL c#3 bis FIL c#8 sind über einen optischen Splitter mit der Glasfaser verbunden, die die Netzknoten K1 und K4 verbindet.

Netzknoten K1 beinhaltet ferner sechs Sendeeinheiten SEN c#3 bis SEN c#8 zur Aussendung von OCDM-Signalen von Netzknoten K1 zu Netzknoten K2, K3, K4. Der Übersicht halber ist lediglich Sendeeinheit SEN c#3 und SEN c#8 graphisch dargestellt. Zu übertragende OCDM-Signale von Netzknoten K1 zu Netzknoten K3 werden beispielsweise über Sendeeinheit SEN c#5 oder SEN c#6 ausgesandt. Sendeeinheit SEN c#5 überträgt z.B. OCDM-Signale im Übertragungskanal c#5, der von Netzknoten K3 empfangen und detektiert werden kann.

Die Ausgänge der Sendeeinheiten SEN c#3 bis SEN c#8 sowie die Ausgänge der Filter FIL c#3 bis FIL c#8 sind über einen optischen Koppler mit der Glasfaser verbunden, die Netzknoten K1 und K2 verbinden.

Beim zweiten Ausführungsbeispiel werden in Netzknoten einzelne Übertragungskanäle empfangen, detektiert und nicht weitergeleitet sowie die restlichen, für den Netzknoten nicht bestimmten Übertragungskanäle über Filter weitergeleitet. Im Beispiel mit vier Netzknoten werden insgesamt acht Übertragungskanäle verwendet, wobei stets nur sechs Übertragungskanäle gleichzeitig auf einer Glasfaser übertragen werden. Jedem Netzknoten stehen sechs Übertragungskanäle zum Senden und zwei Übertragungskanäle zum Empfangen von OCDM-Signalen zur Verfügung.

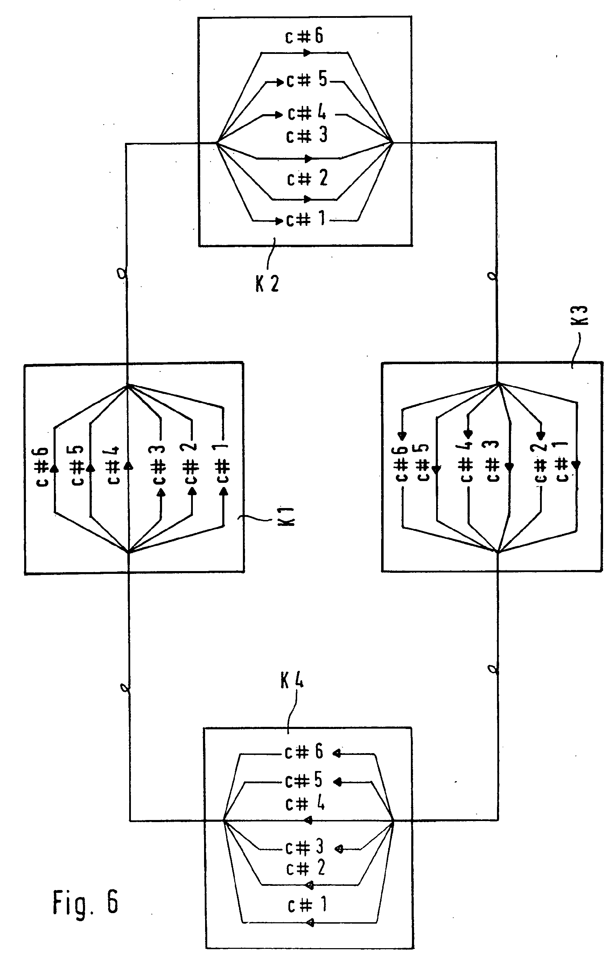

Das dritte Ausführungsbeispiel wird nun unter Zuhilfenahme von Fig. 6 bis 7 erläutert. Fig. 6 zeigt ein optisches Ringnetz. Das Ringnetz beinhaltet vier Netzknoten K1, K2, K3, K4, die über optische Leitungen miteinander verbunden sind. Die optischen Leitungen sind beispielsweise durch optische Glasfaserkabel gebildet.

Über das Ringnetz werden OCDM-Signale in sechs unterschiedlichen optischen Übertragungskanälen c#1, c#2, c#3, c#4, c#5, c#6 übertragen.

Die Übertragungskanäle c#1, c#2, c#3, c#4, c#5, c#6 sind einzelnen Netzknoten K1, K2, K3, K4 zugewiesen. Dadurch ist weniger komplexes Netzwerkmanagement bzw. ein weniger komplexes MAC-Protokoll erforderlich.

Netzknoten K1 empfängt OCDM-Signale auf den optischen Übertragungskanälen c#1 bis c#3 und leitet OCDM-Signale auf den Übertragungskanälen c#4 bis c#6 zum Netzknoten K2 weiter. Ferner überträgt Netzknoten K1 neue Informationen für Netzknoten K2 über Übertragungskanal c#1. Des weiteren überträgt Netzknoten K1 neue Informationen für Netzknoten K3 über Übertragungskanal c#2. Ferner überträgt Netzknoten K1 neue Informationen für Netzknoten K4 über Übertragungskanal c#3.

Netzknoten K2 empfängt OCDM-Signale auf den optischen Übertragungskanälen c#1, c#4, c#5 und leitet OCDM-Signale auf den Übertragungskanälen c#2, c#3 sowie c#6 zum Netzknoten K3 weiter. Ferner werden neue Informationen für die Netzknoten K1, K3, K4 über die Übertragungskanäle c#1, c#4, c#5 ausgesendet.

Netzknoten K3 empfängt OCDM-Signale auf den optischen Übertragungskanälen c#2, c#4, c#6 und leitet OCDM-Signale auf den Übertragungskanälen c#1, c#3 sowie c#5 zum Netzknoten K4 weiter.

Ferner werden neue Informationen für die Netzknoten K1, K2, K4 über die Übertragungskanäle c#2, c#4, c#6 ausgesendet.

Netzknoten K4 empfängt OCDM-Signale auf den optischen Übertragungskanälen c#3, c#5 und c#6 und leitet OCDM-Signale auf den Übertragungskanälen c#1, c#2 und c#4 zum Netzknoten K1 weiter. Ferner werden neue Informationen für die Netzknoten K1, K2, K3 über die Ubertragungskanäle c#3, c#5, c#6 ausgesendet.

Die Verteilung der Übertragungskanäle hat den Vorteil, dass für vier Netzknoten insgesamt nur sechs Übertragungskanäle benötigt werden. Auf jeder Übertragungsstrecke zwischen zwei Netzknoten werden gleichzeitig OCDM-Signale in sechs Übertragungskanälen übertragen, so dass jede Übertragungstrecke optimal ausgelastet ist. Jeder Netzknoten hat drei Sendeeinheiten und drei Empfangseinheiten zum Senden bzw. Empfangen von OCDM-Signalen zu bzw. von drei Netzknoten.

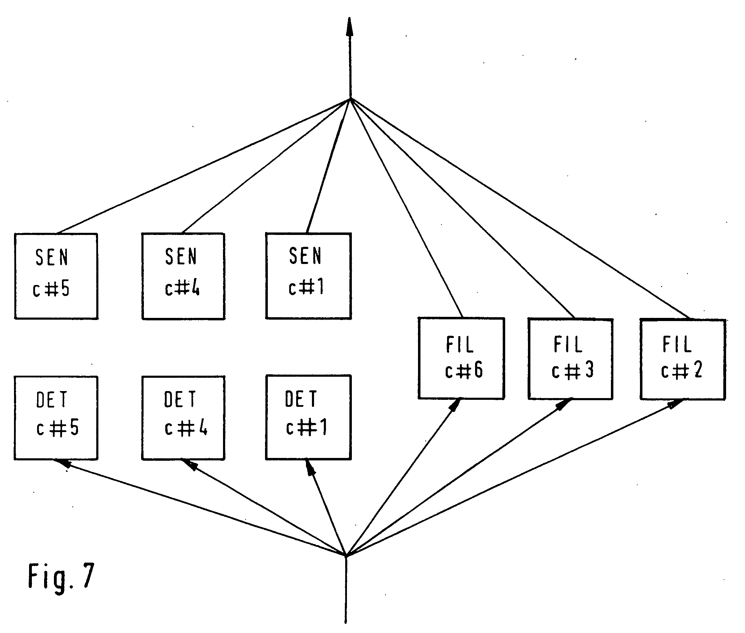

Fig. 7 zeigt beispielhaft einen Ausschnitt aus Netzknoten K2. Netzknoten K2 beinhaltet einen OCDM-Detektor DET c#1 zur Detektion von OCDM-Signalen auf dem Übertragungskanal c#1 und einen OCDM-Detektor DET c#4 zur Detektion von OCDM-Signalen auf dem Übertragungskanal c#4 sowie einen OCDM-Detektor DET c#5 zur Detektion von OCDM-Signalen auf dem Übertragungskanal c#5.

Netzknoten K2 beinhaltet ferner drei Filter FIL c#2, FIL c#3, FIL c#6 zur Weiterleitung von OCDM-Signalen auf den Übertragungskanälen c#2, c#3 und c#6. Jedes der drei Filter FIL c#2, FIL c#3, FIL c#6 beinhaltet z.B. ein entsprechend abgestimmtes Mach-Zehnder-Filter zur Selektion des entsprechenden Übertragungskanals.

Die Eingänge der OCDM-Detektoren DET c#1, DET c#4 und DET c#5 sowie die Eingänge der Filter FIL c#2, FIL c#3, FIL c#6 sind über einen optischen Splitter mit der Glasfaser verbunden, die die Netzknoten K1 und K2 verbindet.

Netzknoten K2 beinhaltet ferner drei Sendeeinheiten SEN c#1, SEN c#4 und SEN c#5 zur Aussendung von OCDM-Signalen von Netzknoten K2 zu Netzknoten K1, K3, K4. Zu übertragende OCDM-Signale von Netzknoten K2 zu Netzknoten K3 werden über Sendeeinheit SEN c#4 ausgesandt. Sendeeinheit SEN c#1 überträgt z.B. OCDM-Signale im Übertragungskanal c#1, der von Netzknoten K1 empfangen und detektiert werden kann.

Die Ausgänge der Sendeeinheiten SEN c#1, SEN c#4, SEN c#5 sowie die Ausgänge der Filter FIL c#2, FIL c#3, FIL c#6 sind über einen optischen Koppler mit der Glasfaser verbunden, die Netzknoten K2 und K3 verbindet.

Beim dritten Ausführungsbeispiel werden in Netzknoten einzelne Übertragungskanäle empfangen, detektiert und ferner zur Aussendung neuer Informationen verwendet sowie die restlichen, für den Netzknoten nicht bestimmten Übertragungskanäle über Filter weitergeleitet. Im Beispiel mit vier Netzknoten werden insgesamt sechs Übertragungskanäle verwendet, wobei stets sechs Übertragungskanäle gleichzeitig auf einer Glasfaser übertragen werden. Jedem Netzknoten stehen drei Übertragungskanäle zum Senden und drei Übertragungskanäle zum Empfangen von OCDM-Signalen zur Verfügung.

In den drei Ausführungsbeispielen sind optische Ringe mit vier bzw. N Netzknoten verwendet. Anstelle von vier können z.B. N=100 Netzknoten oder N gleich jede beliebige, natürliche Zahl für jedes der Ausführungsbeispiele verwendet werden. Die Anzahl der Übertragungskanäle ist von der Bandbreite der einzelnen Übertragungskanäle und der nutzbaren optischenBandbreite auf der optischen Glasfaser abhängig.

In den drei Ausführungsbeispielen sind undirektionale Ringe dargestellt. Die Erfindung kann auch bei bidirektionalen Ringen angewendet werden. Die bidirektionale Übertragung von OCDM-Signalen über eine Glasfaser kann z.B. dazu verwendet werden, um die Übertragungskapazität auf dem Ring zu steigern und/oder um Ersatzpfade zu schaffen über die dann dennoch alle Netzknoten erreichbar sind, z.B. im Falle einer Störung auf einer Glasfaser oder eines Ausfalls einer Glasfaser, letzteres z.B. hervorgerufen durch Kabelbruch.

In allen drei Ausführungsbeispielen sind geschlossene optische Ringe verwendet. Die Erfindung kann auch bei offenen optischen Ringen, Maschennetzen oder Baumstrukturen angewendet werden. Dazu wirkt sich insbesondere vorteilhaft aus: die Mehrfachverwendung eines optischen Übertragungskanals, zum einen zum Empfangen von OCDM-Signalen und zum anderen zum Aussenden neuer Informationen, gegebenenfalls auch mehrfach nacheinander von Netzknoten zu Netzknoten.

## Patentansprüche

1. OCDM-Detektionsvorrichtung (1), beinhaltend einen OCDM-Detektor (2) zur Detektion von empfangenen OCDM-Signalen und eine durch den OCDM-Detektor (2) gesteuerte optische Komponente (3) zur Weiterleitung oder Nicht-Weiterleitung der empfangenen OCDM-Signale in mindestens eine optische Leitung.

2. OCDM-Detektionsvorrichtung (1) nach Anspruch 1, **dadurch gekennzeichnet, dass** die optische Komponente (3) ein Filter (4) aufweist zur Selektion eines optischen Übertragungskanals.

3. OCDM-Detektionsvorrichtung nach Anspruch 1, **dadurch gekennzeichnet, dass** die optische Komponente (3) einen Ein- und einen Ausgang aufweist und beinhaltet: ein mit dem Eingang verbundenes, optisches Zeitverzögerungsglied (5), ein nachgeschaltetes Mach-Zehnder Filter (4) mit zwei Ausgängen und einen vom OCDM-Detektor (2) gesteuerten Schalter (6), der einem Ausgang des Mach-Zehnder-Filters (4) nachgeschaltet ist, und dass der Ausgang der optischen Komponente (3) mit dem Schalter (6) und dem anderen Ausgang des Mach-Zehnder-Filters (4) verbunden ist.

4. OCDM-Detektionsvorrichtung (1) nach Anspruch 2, **dadurch gekennzeichnet, dass** das optische Zeitverzögerungsglied (5) ein Stück Glasfaser ist.

5. OCDM-Detektionsvorrichtung (1) nach Anspruch 1, **dadurch gekennzeichnet, dass** der OCDM-Detektor (2) zur Detektion von speziellen OCDM-Signalen in einem individuellen optischen Übertragungskanal dient und derart ausgestaltet ist, dass eine Ansteuerung der optischen Komponente (3) zur Weiterleitung von OCDM-Signalen erfolgt, wenn keine speziellen OCDM-Signale detektiert werden und eine Ansteuerung der optischen Komponente (3) zur Nicht-Weiterleitung von OCDM-Signalen erfolgt, wenn spezielle OCDM-Signale detektiert werden.

6. OCDM-Detektionsvorrichtung (1) nach Anspruch 1, **dadurch gekennzeichnet, dass** das der Eingang des optischen OCDM-Detektors (2) und der Eingang der optischen Komponente (3) über einen optischen Splitter miteinander verbunden sind.

7. Optisches Netz für OCDM beinhaltend mehrere Netzknoten (node1, node2, ..., nodeN), die über optische Leitungen miteinander verbunden sind und jeweils mindestens eine OCDM-Detektionsvorrichtung (1) nach Anspruch 1 beinhalten.

8. Optisches Netz nach Anspruch 7, **dadurch gekennzeichnet, dass** jeder Netzknoten (node1, node2, ..., nodeN) beinhaltet: mindestens einen optischen Splitter zur Weiterleitung der empfangenen optischen Signale über N optische Leitungen, N parallel geschaltete OCDM-Detektionsvorrichtungen (1) nach Anspruch 1 zur Detektion jeweils eines optischen Kanals und mindestens einen optischen Kombiner zur Zusammenführung der Ausgangssignale der N OCDM-Detektionsvorrichtungen.

9. Optisches Netz nach Anspruch 8, **dadurch gekennzeichnet, dass** in jedem Netzknoten (node1, node2, ..., nodeN) mindestens eine Sendeeinheit vorgesehen ist, um mindestens einen optischen Kanal für die Übertragung von Informationen zu nutzen.

10. Netzknoten (node1, node2, ..., nodeN) für ein OCDM-System, der eine oder mindestens zwei parallel geschaltete OCDM-Detektionsvorrichtungen (1) nach Anspruch 1 beinhaltet.

11. Netzknoten (K1, K2, K3, K4) für ein OCDM-Netz, der mindestens einen OCDM-Detektor (DET c#1, DET c#2, DET c#4, DET c#5) zur Detektion von empfangenen OCDM-Signalen eines individuellen optischen Übertragungskanals und mindestens eine zum mindestens einen OCDM-Detektor (DET c#1, DET c#2, DET c#4, DET c#5) parallel geschaltete optische Komponente (FIL c#3, FIL c#8, FIL c#6, FIL c#2) zur Weiterleitung von empfangenen OCDM-Signalen eines anderen individuellen optischen Übertragungskanals beinhaltet.

12. Netzknoten (K1, K2, K3, K4) nach Anspruch 11, **dadurch gekennzeichnet, dass** mindestens eine Sendeeinheit (SEN c#3, SEN c#8, SEN c#5, SEN c#4, SEN c#1) zur Aussendung von Informationen in einem individuellen optischen Übertragungskanal, der dem individuellen optischen Übertragungskanal eines des mindestens einen OCDM-Detektors (DET c#5, DET c#4, DET c#1) oder dem anderen individuellen optischen Übertragungskanal einer der mindestens einen optischen Komponente (FIL c#3, FIL c#8) entspricht.

13. Optisches Netz für OCDM beinhaltend mehrere Netzknoten (node1, node2, ..., nodeN, K1, K2, K3, K4), die über optische Leitungen miteinander verbunden sind, wobei mindestens ein Netzknoten (node1, node2, ..., nodeN, K1, K2, K3, K4) mindestens eine optische Komponente (3, FIL c#3, FIL c#8, FIL c#6, FIL c#3, FIL c#2) zur Selektion und Weiterleitung eines individuellen optischen Übertragungskanals beinhaltet.
